# EUROPEAN PATENT APPLICATION

(11) **EP 2 078 613 A2**
(43) Date of publication of application: **15.07.2009**
(21) Application number: 09000019.1
(22) Date of filing: 02.01.2009
(51) Int. Cl.: B41J 2/21, B41J 11/00

(54) **Method of printing and printer**

(30) Priority: 09.01.2008 JP 2008002362
(71) Applicant: Dainippon Screen Mfg., Co., Ltd., Kyoto-shi, Kyoto 602-8585 (JP)
(72) Inventor: Asai, Hiroshi, Kyoto-shi Kyoto 602-8585 (JP)
(74) Representative: Goddar, Heinz J.

(57) **Abstract**

In an inkjet printer (1), a halftone image is generated from a grayscale original image with using a first threshold matrix, and the halftone image is printed with color inks having light curability on a base member with liquid repellency. A tint image (82) with a dot area rate 1 to 40 % is generated with a second threshold matrix where the number of halftone dots defined in a unit area in an image generated with the second threshold matrix is smaller than that in an image generated with the first threshold matrix, and the tint image is printed with clear ink having light curability. On the base member (9), halftone dots of the clear ink are distributed according to the tint image (82), and relatively large projections and depressions are macroscopically uniformly formed with lessening small projections and depressions of the color inks, to acquire a printed matter with uniform gloss.

## Description

### BACKGROUND OF THE INVENTION

### Field of the Invention

The present invention relates to a technique for printing an image on an object.

### Description of the Background Art

In printing an original image of gray scale (i.e., continuous tone), an AM (Amplitude Modulated) screening where gray levels are represented by changing the size of halftone dots which are regularly arranged (accurately, a halftone dot is a cluster which is a group of dots (or pixels) connecting one another) and an FM (Frequency Modulated) screening where gray levels are represented by changing the number of halftone dots of certain size which are irregularly arranged (a halftone dot is a dot (or pixel) or a group of dots connecting one another), have been used. Actually, a threshold matrix where a plurality of elements are arranged in a row direction and a column direction and a threshold value is assigned to each element, is generated and prepared in advance, and the original image is compared with the threshold matrix to generate a halftone image used in printing. Such a halftone image is printed on an object by plate printing such as screen printing, offset printing, gravure printing, flexography, and letter press printing or plateless printing using an inkjet printer, an electrophotographic printer, and the like.

Recently, a surface of a printed matter is made glossy by overlaying clear ink on a printed image. For example, Japanese Patent Application Laid-Open No. 2000-301844 (Document 1) and Japanese Patent Application Laid-Open No. 2002-219850 (Document 2) disclose a technique for printing an image on a glass substrate or an FRP (Fiber Reinforced Plastics) molded plate by the screen printing with use of color inks, and then overlaying clear ink onto the whole image. Japanese Patent Application Laid-Open No. 2006-27193 (Document 3) discloses a technique for creating an image with gloss, where an image is formed on a recording medium having water absorbency with using color inks which contain pigments, high boiling point organic solvent and water, and thereafter, clear ink is ejected onto the recording medium in accordance with amounts and positions determined by a halftone process (halftone dot process). Further, Japanese Patent Application Laid-Open No. 2006-15691 (Document 4) discloses a technique, in an inkjet printer, for printing an image on a surface of a recording media with use of color inks having UV curability and then forming a clear coat layer, which covers the whole image of the color inks, with using invisible ink having UV curability.

When an image is printed with color inks on an object where a surface of the object has liquid repellency, the color inks remain (are fixed) on the object relatively thickly and small projections and depressions are irregularly formed by the color inks which are distributed in accordance with the image to be printed. In this case, like in the technique of Document 3, even if the clear ink is applied onto the object in accordance with amounts and positions determined by the halftone process, an observer feels that, depending on the amounts of the clear ink on the object and the like, gloss on the printed image on the object is nonuniform because of influences of the small projections and depressions of the color inks. It is considered that the clear ink is applied onto the whole image of the color inks like in the techniques of Documents 1, 2 and 4, however, it is difficult to apply the clear ink at a uniform thickness, so print unevenness (coating unevenness) of the clear ink occurs on the object and the observer feels gloss on the printed image is nonuniform.

### SUMMARY OF THE INVENTION

The present invention is intended for a method of printing an image on an object. It is an object of the present invention to make a printed matter with uniform gloss.

The method according to the present invention comprises: a) printing a halftone image on an object having liquid repellency with using color inks, the halftone image being generated from a grayscale original image with use of a first threshold matrix; and b) printing a tint image on the object with using clear ink to overlay an image of the clear ink on an image of the color inks, the tint image being a halftone image generated from an image with a uniform gray level with use of a second threshold matrix where the number of halftone dots which are defined in a unit area in a halftone image generated with the second threshold matrix is smaller than that in a halftone image generated with the first threshold matrix, the tint image having a dot area rate which is equal to or larger than 1 % and equal to or smaller than 40 %. According to the present invention, it is possible to make a printed matter with uniform gloss.

According to a preferred embodiment of the present invention, the step b) comprises the steps of: b1) ejecting fine droplets of clear ink with light curability, onto the object from a plurality of outlets; b2) moving the plurality of outlets relatively to the object in parallel with the step b1); and b3) applying light to the clear ink on the object. More preferably, the step a) comprises the steps of: a1) ejecting fine droplets of color inks with light curability, onto the object from another plurality of outlets; a2) moving another plurality of outlets relatively to the object in parallel with the step a1); and a3) applying light to the color inks on the object. In this manner, by printing the image of the color inks and the image of the clear ink in an inkjet manner, it is possible to make the printed matter easily.

In this case, the steps a) and b) are concurrently performed to thereby make the printed matter for a short time.

According to another preferred embodiment of the present invention, the tint image has isotropy. It is thereby possible to make the printed matter with uniform gloss without depending on a viewing direction.

According to still another preferred embodiment of the present invention, a part of a printing area of the object is an area where the image of the color inks is printed, and the tint image is printed on a whole of the printing area. Thus, it is possible to make the printed matter with uniform gloss on the whole of the printing area.

The present invention is also intended for a printer for printing an image on an object.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing an appearance of a printer;
Fig. 2 is a bottom plan view showing a head;
Fig. 3 is a view showing the head and a base member overlapping each other;
Fig. 4 is a block diagram showing functional constitutions of a control part;
Fig. 5 is a flowchart showing an operation flow for printing an image in the printer;
Fig. 6 is a view abstractly showing a threshold matrix and an original image;
Figs. 7A to 7E are views each explaining an ejection order of color inks at writing positions;
Figs. 8A to 8C are views each showing a halftone image;
Fig. 9 is a view showing a halftone image generated with a first threshold matrix;
Fig. 10 is a view showing a tint image generated with a second threshold matrix;
Fig. 11 is a view showing a cross section of the base member on which an image of the color inks has just been printed;
Fig. 12 is a view showing a cross section of the base member on which an image of the clear ink is printed;
Fig. 13 is a view showing a cross section of the base member on which an image of the clear ink is printed by a technique of a comparative example;
Fig. 14 is a view showing another example of a tint image;
Fig. 15 is a view showing still another example of a tint image;
Figs. 16A to 16C are views each showing a halftone image;
Fig. 17 is a view showing still another example of a tint image;
Fig. 18 is a view showing another example of the head; and
Fig. 19 is a view explaining an ejection order of inks at writing positions.

### DESCRIPTION OF THE PREFERRED EMBODIMENTS

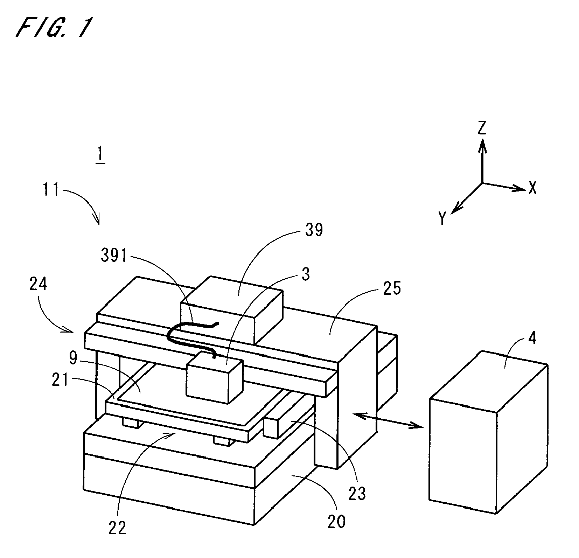

Fig. 1 is a perspective view showing an appearance of a printer 1 in accordance with a preferred embodiment of the present invention. The printer 1 performs printing in an inkjet manner on a plate-like or sheet-like base member 9 whose surface to be printed has liquid repellency (hydrophobicity).

The printer 1 of Fig. 1 has a main body 11 and a control part 4, and the main body 11 has a stage 21 for holding the base member 9 on a surface on the (+Z) side of Fig. 1 and a stage moving mechanism 22 which is provided on a base part 20. A nut of a ball screw mechanism of the stage moving mechanism 22 is fixed on a surface of the stage 21 which is opposite to the surface on which the base member 9 is held. By rotating a motor connected to the ball screw mechanism, the stage 21 smoothly moves in the Y direction (sub scan direction) of Fig. 1. A position detection module 23 for detecting a position of the stage 21 relative to the base part 20 is further provided on the base part 20.

A head 3 for ejecting fine droplets of ink onto the base member 9 is positioned above the stage 21, and the head 3 is supported by a head moving mechanism 24, which has a ball screw mechanism and a motor, so as to be movable in a main scan direction (the X direction of Fig. 1) which is perpendicular to the sub scan direction and is along a main surface of the base member 9. A flame 25 is provided on the base part 20 over the stage 21, and the head moving mechanism 24 is fixed on the flame 25. A light source 39 for emitting UV (ultraviolet) light is provided on the flame 25, and light emitted from the light source 39 is directed into the head 3 through a plurality of optical fibers (actually, a bundle of the plurality of optical fibers which are shown by a thick line 391 in Fig. 1).

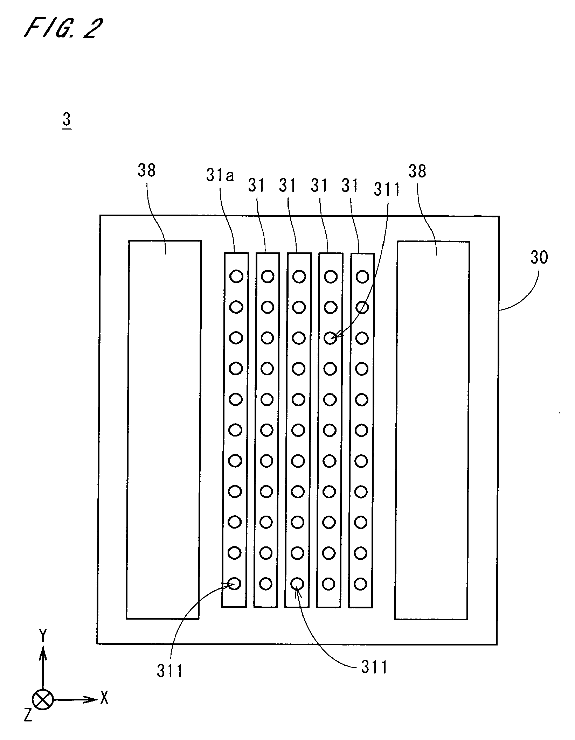

Fig. 2 is a bottom plan view showing the head 3. As shown in Fig. 2, the head 3 has a plurality of (five in Fig. 2) nozzle units 31 for ejecting inks of different colors (including colorless ink) (a nozzle unit at the end on the (-X) side is shown by a reference sign 31 a), and the plurality of nozzle units 31 are arranged in the X direction and fixed on a main body 30 of the head 3. A nozzle unit 31 at the end on the (+X) side of Fig. 2 ejects ink of K (black), a nozzle unit 31 on the (-X) side of the nozzle unit 31 of K ejects ink of C (cyan), a nozzle unit 31 on the (-X) side of the nozzle unit 31 of C ejects ink of M (magenta), a nozzle unit 31 on the (-X) side of the nozzle unit 31 of M ejects ink of Y (yellow), and the nozzle unit 31a at the end on the (-X) side ejects colorless clear ink (also called as invisible ink). In the following description, colored inks of K, C, M, Y are referred to as "color inks" for distinction of the clear ink. Naturally, nozzle units for ejecting other color inks such as light cyan, light magenta and white may be provided in the head 3.

In each nozzle unit 31, 31a, a plurality of (e.g., 300) outlets 311 are arranged in the Y direction of Fig. 2 at a regular pitch (e.g., a pitch corresponding to 600 dpi (dot per inch)). Outlets 311 which correspond to one another in the plurality of nozzle units 31, 31a are arranged at the same position in the Y direction. Each of the color inks and the clear ink includes UV curing agent and has UV curability.

In the head 3, two light irradiation parts 38 connected to the light source 39 are provided on the (+X) side and (-X) side of the plurality of nozzle units 31, 31a, respectively. The plurality of optical fibers are arranged along the Y direction in each light irradiation part 38, and the light irradiation part 38 applies (irradiates) UV light to a linear region which extends in the Y direction on the base member 9.

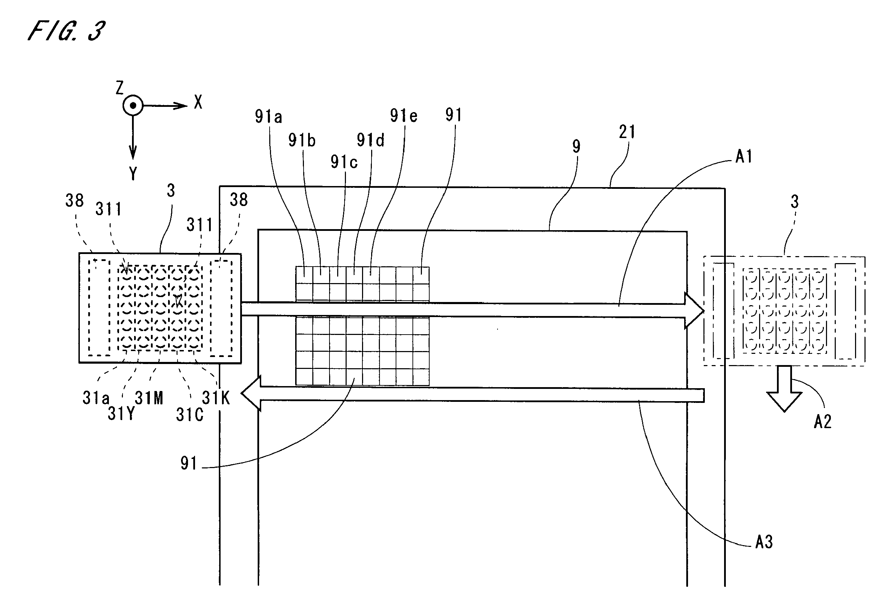

In the actual printing, the head 3 shown by a solid line in Fig. 3 moves toward the (+X) direction (a direction represented by an arrow A1 in Fig. 3) while ejecting ink. After the head 3 reaches on the (+X) side of the base member 9 as shown by a double-dashed line in Fig. 3, the base member 9 moves on the (-Y) side by a predetermined distance (i.e., the head 3 performs sub scanning relatively to the base member 9 in a direction represented by an arrow A2 in Fig. 3). Then, the head 3 moves toward the (-X) direction (a direction represented by an arrow A3 in Fig. 3) while ejecting ink, and after the head 3 reaches on the (-X) side of the base member 9, the base member 9 moves on the (-Y) side. Thus, in the printer 1, the head 3 performs main scanning relatively to the base member 9 in the X direction, and performs sub scanning relatively to the base member 9 in the Y direction every time when the main scanning is finished.

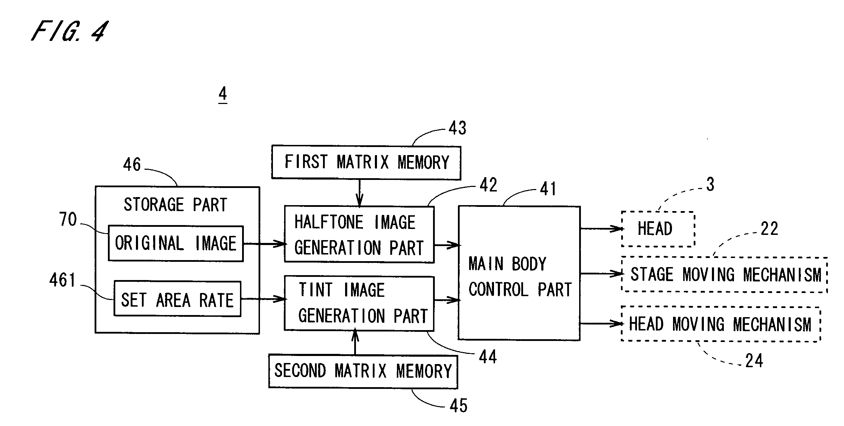

Fig. 4 is a block diagram showing a functional constitution of the control part 4. As shown in Fig. 4, the control part 4 has a main body control part 41 for performing ejection control of inks from the plurality of nozzle units 31, 31a in the head 3 and movement control relative to the stage moving mechanism 22 and the head moving mechanism 24.

The control part 4 further has a storage part 46 for storing data 70 of a color image to be represented by halftoning (halftone dots) (that is to say, the color image is an image where each pixel has pixel values of the plurality of color components and hereinafter, referred to as "original image") (the data 70 is hereinafter also simply referred to as "original image 70") and a set area rate 461 which is a dot area rate (halftone dot area rate) of an image printed with the clear ink, a first matrix memory 43 (also called as SPM (Screen Pattern Memory)) for storing threshold matrixes of the plurality of color components corresponding to the color inks, a halftone image generation part 42 for generating a halftone image by comparing the original image with the threshold matrix for each color component, a second matrix memory 45 for storing a threshold matrix for generation of the image printed with the clear ink, and a tint image generation part 44 for generating a tint image which is the image printed with the clear ink. In the following description, the threshold matrix for each color component is referred to as a "first threshold matrix" and the threshold matrix for generation of the image printed with the clear ink is referred to as a "second threshold matrix". In the actual printer 1, the functions of the halftone image generation part 42 and the tint image generation part 44 are implemented by one RIP (Raster image processor).

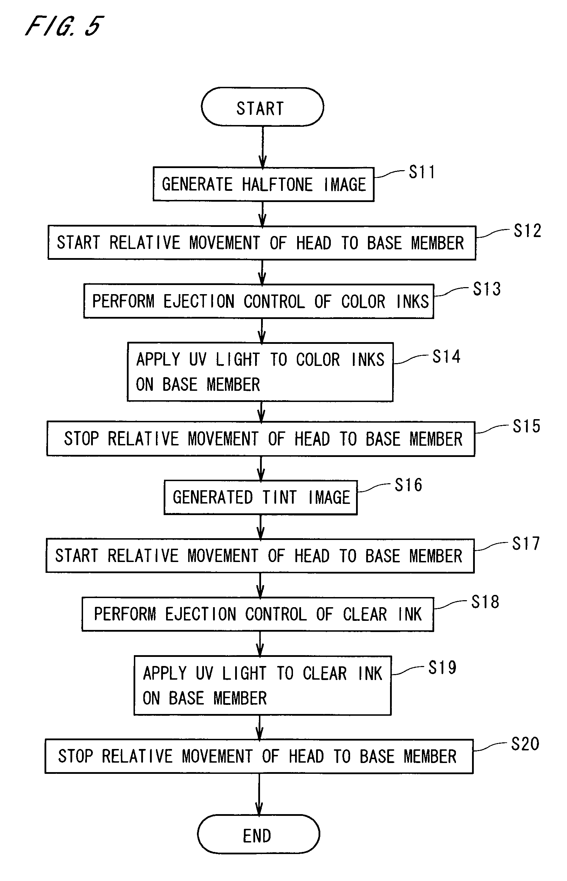

Next discussion will be made on an operation for printing an image in the printer 1 with reference to Fig. 5. When printing is performed in the printer 1, first, in the halftone image generation part 42, the original image 70 stored in the storage part 46 (e.g., a dedicated image memory which is a part of the storage part 46) is compared with the first threshold matrixes stored in the first matrix memory 43 and halftoning (i.e., a halftone dot meshing) is thereby performed on the original image 70, to generate halftone image data (hereinafter, also simply referred to as "halftone image") used in printing with the color inks (Step S11).

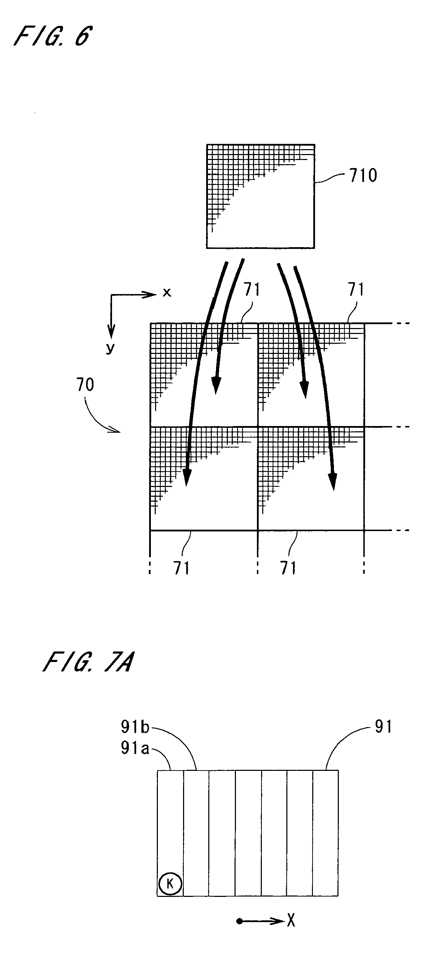

Here, halftoning of the original image in the halftone image generation part 42 is discussed. In halftoning of the original image, as shown in Fig. 6, the original image 70 is divided into a large number of areas having the fixed size and repeat areas 71 each of which serves as a unit in halftoning are set. The first matrix memory 43 has a memory area for each color component corresponding to one repeat area 71 and a threshold value is set to each address (coordinates) of the memory area to store the first threshold matrix 710 for the color component. Conceptually, each repeat area 71 of the original image 70 and the first threshold matrix 710 for each color component are superposed and a pixel value of the color component of each pixel in the repeat area 71 is compared with a threshold value in the first threshold matrix 710 corresponding to the pixel value, to thereby determine whether or not writing (formation of a unit dot of the color) should be performed on the position of the pixel on the base member 9.

Actually, a pixel value of one pixel in the original image 70 is read out with respect to each color component from the storage part 46, on the basis of an address signal outputted from an address generator of the halftone image generation part 42. An address signal representing a position in the repeat area 71 corresponding to the pixel in the original image 70 is also generated in the address generator, one threshold value in the first threshold matrix 710 of each color component is specified and read out from the first matrix memory 43. The pixel value from the storage part 46 and the threshold value from the first matrix memory 43 are compared for each color component in the halftone image generation part 42, to determine a pixel value of the position (address) of the pixel in a binary halftone image (outputted image) of each color component.

Therefore, looking at one color component, in the grayscale original image 70 shown in Fig. 6, for example, a pixel value "1" is assigned (i.e., a unit dot is set) at each position where a pixel value is larger than the threshold values of the first threshold matrix 710 corresponding to the pixel value, and a pixel value "0" is assigned (i.e., a unit dot is not set) at each of remaining pixels. In such a manner, halftoning is performed on the original image 70 with use of the first threshold matrix 710 in the halftone image generation part 42, to generate a (color) halftone image representing ON/OFF of ejection of inks from the nozzle units 31 for the color inks in printing with the color inks, which is discussed later.

In the printer 1 of Fig. 1, when a portion of the halftone image (for example, the portion corresponding to a plurality of repeat areas 71 at the end on the (-y) side) which is first printed is generated for each color, main scanning of the head 3 is started by driving the head moving mechanism 24 (Step S12). Ejection of the color inks from the plurality of outlets 311 included in the nozzle units 31 for the color inks is controlled in parallel with relative movement of the head 3 to the base member 9 (Step S13) and unit dots are written on the base member 9 with using the color inks. The printing operation with the color inks is performed concurrently with the above halftoning (generation process of the halftone image for the color inks) (the same is applied in a printing operation with the clear ink, which is discussed later).

Since the halftone image is printed on the base member 9, the plurality of pixels in the halftone image are considered to be arranged on the base member 9. Therefore, looking at a group of a plurality of writing positions 91 in Fig. 3 arranged in the X direction at a certain position in the Y direction, where a position on the base member 9 corresponding to each pixel in the halftone image is considered as a writing position 91 (a part of writing positions are represented by thin-lined rectangle in Fig. 3), an outlet 311 of the nozzle unit for ejecting ink of K (the nozzle unit 31K in Fig. 3) reaches above a writing position 91a at the end on the (-X) side of the group, at a certain time T1 (i.e., an ejection position on the base member 9 of the outlet 311 reaches the writing position 91a) and then, a unit dot of ink of K is formed at the writing position 91 a as shown in Fig. 7A.

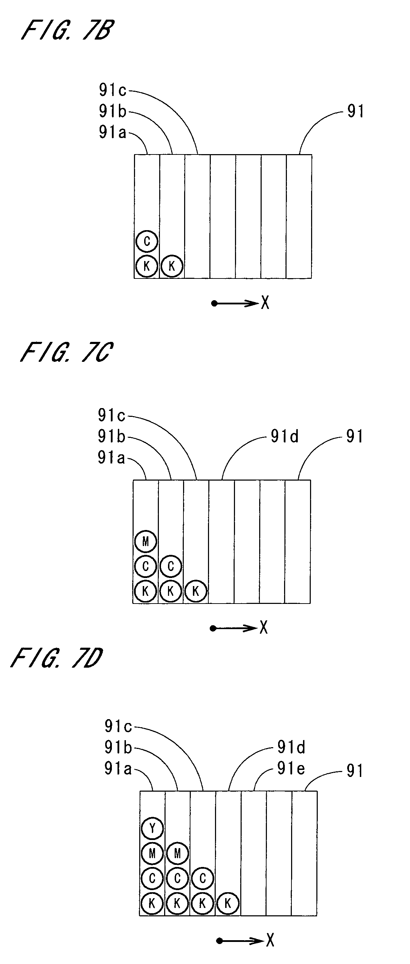

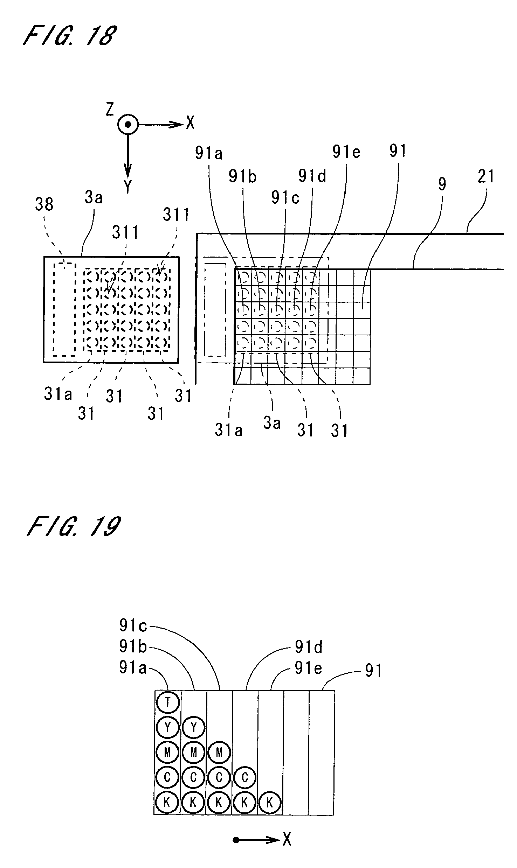

In Fig. 7A (and Figs. 7B to 7E and Fig. 19 discussed later), one of "K", "C", "M" and "Y" is described in a circle and this shows color of ink (accurately, the color of ink to be a target of ejection control relative to each writing position 91) which is ejected at each writing position 91. For convenience of illustration, the shape of each writing position 91 is long in a longitudinal direction. In the following description, it is presumed that a unit dot of each color is virtually formed at all the writing positions 91 and a distance (center-to-center distance) in the X direction between adjacent two nozzle units 31 in the head 3 is equal to a distance between adjacent two writing positions 91 in the X direction (hereinafter, the distance between the adjacent two writing positions 91 is referred to as "writing position pitch").

Subsequently, at a time T2 where the head 3 moves in the (+X) direction by the writing position pitch from the position at the time T1, an outlet 311 of the nozzle unit for ejecting ink of C (the nozzle unit 31C in Fig. 3) reaches above the writing position 91a and an outlet 311 of the nozzle unit 31 K reaches above a writing position 91 b on the (+X) side of the writing position 91a. With this operation, as shown in Fig. 7B, a unit dot of ink of C is formed on the unit dot of K at the writing position 91 a (i.e., a unit dot of ink of C is stacked on the unit dot of K) and a unit dot of ink of K is formed at the writing position 91 b.

At a time T3 where the head 3 moves in the (+X) direction by the writing position pitch from the position at the time T2, an outlet 311 of the nozzle unit for ejecting ink of M (the nozzle unit 31M in Fig. 3) reaches above the writing position 91 a, an outlet 311 of the nozzle unit 31C reaches above the writing position 91b, and an outlet 311 of the nozzle unit 31K reaches above a writing position 91 c on the (+X) side of the writing position 91 b. With this operation, as shown in Fig. 7C, a unit dot of ink of M is formed on the unit dots of K and C at the writing position 91 a, a unit dot of ink of C is formed on the unit dot of K at the writing position 91b, and a unit dot of ink of K is formed at the writing position 91 c.

At a time T4 where the head 3 moves in the (+X) direction by the writing position pitch from the position at the time T3, an outlet 311 of the nozzle unit for ejecting ink of Y (the nozzle unit 31Y in Fig. 3) reaches above the writing position 91a, an outlet 311 of the nozzle unit 31M reaches above the writing position 91b, an outlet 311 of the nozzle unit 31C reaches above the writing position 91c, and an outlet 311 of the nozzle unit 31 K reaches above a writing position 91d on the (+X) side of the writing position 91c. With this operation, as shown in Fig. 7D, a unit dot of ink of Y is formed on the unit dots of K, C and M at the writing position 91a, a unit dot of ink of M is formed on the unit dots of K and C at the writing position 91b, a unit dot of ink of C is formed on the unit dot of K at the writing position 91c, and a unit dot of ink of K is formed at the writing position 91d.

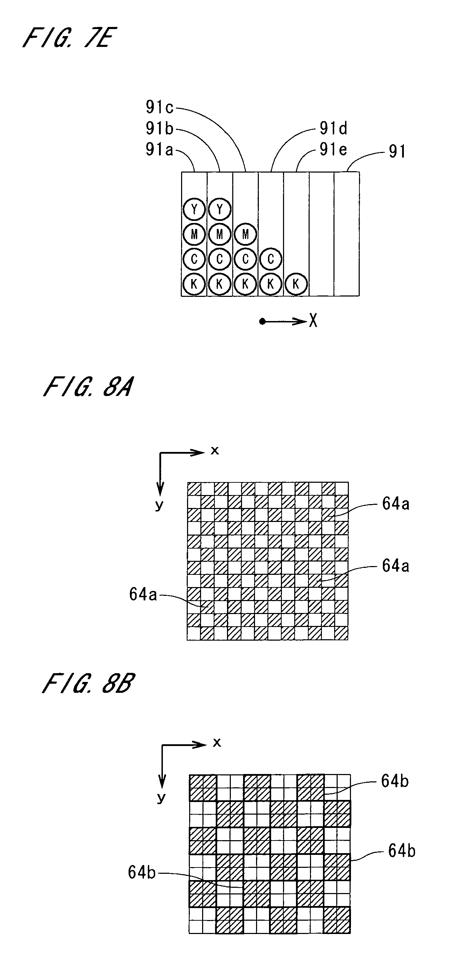

At a time T5 where the head 3 moves in the (+X) direction by the writing position pitch from the position at the time T4, an outlet 311 of the nozzle unit 31Y reaches above the writing position 91b, an outlet 311 of the nozzle unit 31M reaches above the writing position 91 c, an outlet 311 of the nozzle unit 31C reaches above the writing position 91d, and an outlet 311 of the nozzle unit 31K reaches above a writing position 91e on the (+X) side of the writing position 91d. With this operation, as shown in Fig. 7E, a unit dot of ink of Y is formed on the unit dots of K, C and M at the writing position 91 b, a unit dot of ink of M is formed on the unit dots of K and C at the writing position 91c, a unit dot of ink of C is formed on the unit dot of K at the writing position 91d, and a unit dot of ink of K is formed at the writing position 91e.

As described above, unit dots of inks of K, C, M, Y are subsequently formed at each writing position 91 on the base member 9 which the head 3 passes through. Then, (fine droplets of) the color inks which have just been ejected onto the base member 9 are hardened by UV light which is applied onto the base member 9 from the light irradiation part 38 on the (-X) side (i.e., provided on the rear side of the travelling direction of the head 3) (Step S 14).

As shown by double-dashed lines in Fig. 3, after the head 3 reaches on the (+X) side of the base member 9, the base member 9 moves on the (-Y) side by a predetermined distance, and the head 3 moves in (-X) direction while ejecting inks. At this time, at each writing position 91 which the head 3 passes through, the formation order of unit dots of inks of K, C, M, Y is different from that in the immediate main scanning (main scanning from the (-X) side toward the (+X) direction), but in the present operation example, it is considered that decrease of the quality of an image in a printed matter (printed material) caused by the differences of ejection orders of the plurality of color inks is no problem. Naturally, in order to improve the quality of the image, there may be a case where after completion of the main scanning from the (-X) side toward the (+X) direction, the head 3 goes back to the (-X) side of the base member 9 without ejecting inks, in parallel with movement of the base member 9 toward the (-Y) direction, and thereby the ejection orders of the plurality of color inks become the same at all the writing positions 91 to print an image of the color inks, like in an operation example which is described later with reference to Fig. 18. In this case, the light irradiation part 38 provided on the (+X) side of the nozzle units 31, 31a can be omitted.

In the above description referring to Figs. 7A to 7E, though unit dots of inks of K, C, M, Y are formed at all the writing positions 91, actually, when a pixel value in the halftone image corresponding to an ejection position of each outlet 311 on the base member 9 is "1", a unit dot is formed at the ejection position, and when the pixel value in the halftone image is "0", a unit dot is not formed at the ejection position. In this manner, with respect to each component of K, C, M, Y, ejection of the color ink from each outlet 311 is controlled in accordance with the comparison result between the pixel value of the original image 70 at the ejection position of the outlet 311 on the base member 9 and the threshold value of the first threshold matrix corresponding to the pixel value, while moving the plurality of ejection positions on the base member 9, which individually correspond to the plurality of outlets 311, relatively to the base member 9.

In the printer 1, an operation for recording a halftone image on the base member 9 while generating the halftone image is performed with respect to components of K, C, M, Y at the same time to print a color halftone image representing the color original image on the base member 9 with use of the color inks. After the whole halftone image is printed on the base member 9, the head 3 goes back to the vicinity of the print start position and relative movement of the head 3 to the base member 9 is stopped (Step S 15). As discussed above, Steps S 12 to S 15 of Fig. 5 are the process for printing the image of the color inks on the base member 9.

Subsequently, in the tint image generation part 44 in Fig. 4, the set area rate 461 (the set area rate discussed later, which is equal to or larger than 1 percent (%) and equal to or smaller than 40 %) which is inputted by an operator in advance is read out from the storage part 46, and (data of) a halftone image which is generated with use of the second threshold matrix from an image with a uniform pixel value corresponding to the set area rate 461 (for example, a pixel value corresponding to 25 % of the entire grayscale range when the set area rate 461 is 25 %), is treated as a tint image (Step S16). The operation in the tint image generation part 44 is the same as that in the halftone image generation part 42.

In the printer 1, main scanning of the head 3 is started (Step S17), and ejection of the clear ink from the plurality of outlets 311 included in the nozzle unit 31a for the clear ink is controlled like the operation in printing of the image of the color inks, in parallel with relative movement of the head 3 to the base member 9 (Step S 18). At this time, the clear ink which has just been ejected onto the base member 9 is hardened by UV light which is applied onto the base member 9 from the light irradiation part 38 in the head 3 (Step S 19).

Actually, an area on the base member 9 where the image of the color inks is printed by the above process is limited to a smaller area than a printed area which can be actually printed (in the preferred embodiment, the printing area is the whole main surface of the base member 9 to be printed), and an area where the tint image is printed with the clear ink is the whole printing area. After the whole tint image is printed on the base member 9 with the clear ink, the head 3 goes back to the vicinity of the print start position and relative movement of the head 3 to the base member 9 is stopped to complete the printing operation in the printer 1 (Step S20). As described, Steps S 17 to S20 of Fig. 5 are the operation for printing the image of the clear ink on the base member 9 to overlay the image of the clear ink on the image of the color inks.

A printed matter made by the above printing operation (i.e., the base member 9 on which the image of the color inks and the image of the clear ink are printed) is placed at, e.g., a predetermined position in an open-air space and displayed as an advertising medium or the like. Since the color inks and the clear ink used in the present preferred embodiment have excellent light resistance and water resistance, deterioration of the printed image can be suppressed even if the printed matter is placed in the open-air space for a long time. Naturally, the printed matter may be placed in an indoor space.

Discussion will be made on a halftone structure (a screen structure) of an image which is generated with each of the first and second threshold matrixes. As discussed earlier, when a halftone image (including a tint image) is generated in the printer 1, a grayscale image is compared with threshold matrixes. For example, in a case of using a threshold matrix for the FM screening, grayscale representation in a halftone image is made by changing the number of halftone dots of certain size, which are arranged macroscopically uniformly in a random fashion (the halftone dot here is a pixel or a group of pixels connecting one another).

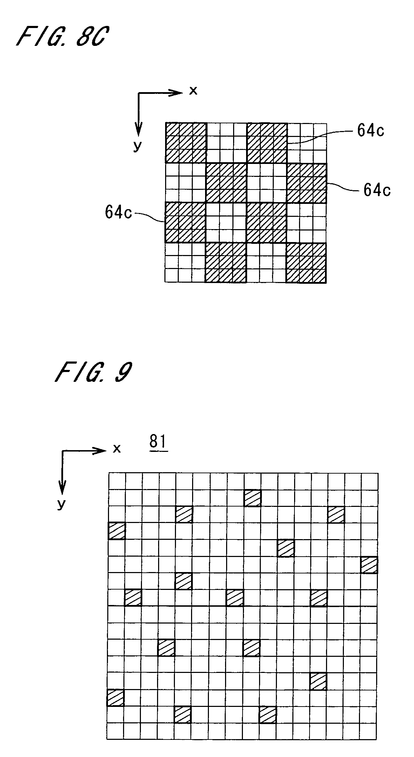

If an image with a uniform gray level is represented by halftone dots with using each of a plurality of threshold matrixes for the FM screening, a plurality of halftone images shown in Figs. 8A to 8C are generated. Actually, the halftone images of Figs. 8A to 8C correspond to a gray level of 50 %, and one pixel in Fig. 8A is one halftone dot 64a (which is indicated by diagonal lines in Fig. 8A and the same is applied in Figs. 8B and 8C). A group of four pixels in Fig. 8B (a group of pixels surrounded by a thick-lined rectangle in Fig. 8B), which are arranged in a row direction (x direction) and a column direction (y direction) in two rows and two columns, connecting one another, is one halftone dot 64b, and a group of nine pixels in Fig. 8C (a group of pixels surrounded by a thick-lined rectangle in Fig. 8C), which are arranged in the row and column directions in three rows and three columns, connecting one another, is one halftone dot 64c.

In the halftone images generated with the threshold matrixes for the FM screening, the number of halftone dots which can be arranged in a unit area with a predetermined size is the density of halftone dots, and the density of halftone dots corresponding to each threshold matrix is constant in any gray levels. In the examples of Figs. 8A to 8C, the density of halftone dots is highest in the halftone image of Fig. 8A and is lowest in the halftone image of Fig. 8C. The pitch of halftone dots in the row and column directions (and the size of halftone dot) is smallest in the halftone image of Fig. 8A and is largest in the halftone image of Fig. 8C. In the halftone image represented by the FM screening, a distribution of high values indicating periodicity in the characteristic of spatial frequency (spectrum) doesn't depend on directions (i.e., the distribution is constant in any direction), and the halftone image has isotropy (doesn't have directional property).

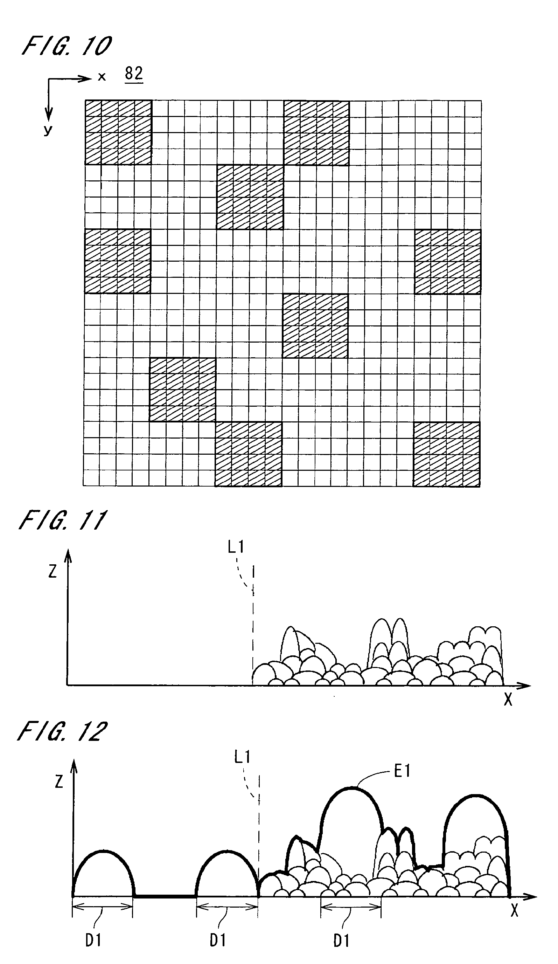

Fig. 9 is a view showing a part of a halftone image 81 generated with a first threshold matrix for the FM screening. Fig. 10 is a view showing a part of a tint image 82 with a dot area rate (i.e., an area ratio of halftone dots in the area with the predetermined size) of 25 %, the tint image 82 being generated with a second threshold matrix for the FM screening. One pixel in the halftone image 81 of Fig. 9 is one halftone dot, while a group of pixels in 4 rows and 4 columns (4×4) (a group of 16 pixels surrounded by a thick-lined rectangle in Fig. 10) in the tint image 82 of Fig. 10 is one halftone dot. The density of halftone dots in the halftone image 81 generated with the first threshold matrix is higher than (16 times) that in the tint image 82 generated with the second threshold matrix. In the following description, each of one unit dot in a printed image (an image of the color inks) corresponding to one halftone dot in a halftone image (or a group of a plurality of unit dots in the case of using the first threshold matrix where a plurality of pixels are one halftone dot) and a group of unit dots in a printed image (an image of the clear ink) corresponding to one halftone dot in a tint image is also referred to as a "halftone dot".

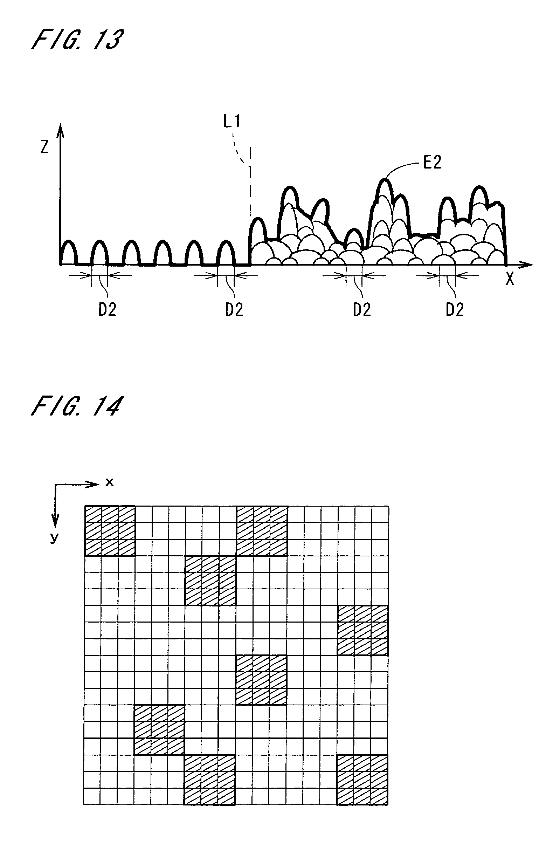

Fig. 11 is a view showing a cross section of the base member 9 on which the halftone image has just been printed with the color inks. In Fig. 11, the main surface of the base member 9 is overlapped with the X axis (horizontal axis), and diagonal lines of cross sections of the inks on the base member 9 are omitted. A vertical (broken) line L1 in Fig. 11 represents a border of an area in which the image of the color inks is printed, and the image of the color inks is not printed in a left area of the vertical line L1 (the same is applied in Figs. 12 and 13 discussed later).

As discussed earlier, since the color inks with UV curability are ejected onto the base member 9 having liquid repellency and the color inks are hardened by application of the UV light in the printer 1, a large number of halftone dots of the four color inks are distributed on the base member 9 according to the halftone image 81 (in the preferred embodiment, a halftone dot of each color consists of one unit dot.) and small (high frequency) projections and depressions (i.e., film thickness unevenness of the color inks) are irregularly formed.

Fig. 12 is a view showing a cross section of the base member 9 on which a tint image is printed with the clear ink. As discussed above, since one halftone dot in the tint image 82 is a group of a plurality of pixels in the printer 1, one halftone dot on the base member 9 is also a group of a plurality of unit dots. Therefore, as shown in Fig. 12, relatively large halftone dots consisting of the clear ink of the plurality of unit dots are distributed on the base member 9 according to the tint image 82, and relatively large (low frequency) projections and depressions are macroscopically uniformly formed while lessening the small projections and depressions of the color inks (i.e., the distribution of the film thicknesses of the inks is almost according to the tint image 82). As a result, when the printed image on the base member 9 is viewed from various directions, an observer feels that gloss on the printed image is uniform (i.e., uniform texture occurs). In Fig. 12, the (ideal) width in the X direction of one halftone dot of the clear ink is represented by an arrow D1, and a ridge line of the surface (including the inks) on the base member 9 is represented by a thick line E1 (the same is applied to an arrow D2 and a line E2 in Fig. 13 discussed later).

Discussion will be made on the density of halftone dots and the dot area rate in a tint image (an image of the clear ink). If a threshold matrix where the density of halftone dots in a halftone image generated with the threshold matrix is the same as that in a halftone image generated with the first threshold matrix is used as a second threshold matrix and a tint image is printed on the base member 9, since one halftone dot of the clear ink is formed by one unit dot, film thicknesses unevenness of the color inks is almost maintained as shown in Fig. 13, the observer feels that gloss on the printed image on the base member 9 is nonuniform. Therefore, in the printer 1, it is important that a tint image is generated with the second threshold matrix where the density of halftone dots in a halftone image generated with the second threshold matrix is lower than that in a halftone image generated with the first threshold matrix for generation of the image of the color inks.

In the normal printing, it is difficult to apply ink onto the almost whole surface of a base member at a uniform thickness. Thus, if a tint image with a dot area rate near 100 % is printed with the clear ink in the printer 1, print unevenness (coating unevenness) of the clear ink occurs on the base member 9 and the observer feels gloss on a printed matter is nonuniform. Even in a case where a tint image with a dot area rate corresponding to a middle gray level is printed with the clear ink, if connection of halftone dots occurs in many positions in the tint image, nonuniformity of gloss is generated on the base member 9 by a group of halftone dots (halftone dots of the clear ink) connecting one another.

Thus, in the printer 1 of Fig. 1, it is important that a tint image where connection of halftone dots unlikely occurs, i.e., a tint image with a dot area rate corresponding to a relatively low gray level, is printed with the clear ink. Specifically, a tint image with a dot area rate which is equal to or larger than 1 % and equal to or smaller than 40 % (more preferably, equal to or larger than 10 % and equal to or smaller than 25 %) is generated with the second threshold matrix to be printed with the clear ink. As a result, it is possible to make a printed matter with uniform gloss in the printer 1.

In the printer 1 of Fig. 1, though the tint image where a group of pixels in 4 rows and 4 columns (4×4) (16 pixels) is one halftone dot is generated, as long as the density of halftone dots in a generated halftone image is lower than that in the first threshold matrix, for example, a tint image where one halftone dot is formed by a group of pixels in 3 rows and 3 columns (3×3) (9 pixels) may be generated as shown in Fig. 14.

There is a case where a group of a plurality of pixels in a halftone image generated with the first threshold matrix (an image printed with the color inks) is one halftone dot. Actually, if the density of halftone dots in a tint image generated with the second threshold matrix (an image of the clear ink) is as large as or lower than 1/4 times (more preferably, as large as or smaller than 1/9 times) the density of halftone dots in the halftone image generated with the first threshold matrix (the image of the color inks), small projections and depressions of the color inks are surely lessened on the base member 9 and large projections and depressions can be macroscopically uniformly distributed. If the density of halftone dots in the tint image generated with the second threshold matrix is as large as or higher than 1/100 times (more preferably, as large as or larger than 1/36 times) the density of halftone dots in the halftone image generated with the first threshold matrix, the observer can not recognize the halftone structure in the image of the clear ink at a normal observation distance (i.e., one halftone dot in the image of the clear ink cannot be recognized).

In the threshold matrix for the FM screening where the pitch of halftone dots which can be arranged in the row direction is made equal to that in the column direction (i.e., the threshold matrix for the FM screening where one halftone dot is a square), since a reciprocal of ratio of the densities of halftone dots in the first threshold matrix and the second threshold matrix corresponds to a square of ratio of the pitches of the halftone dots, a preferable range of the ratio of above densities of the halftone dots is equivalent to that the pitch of halftone dots in the tint image generated with the second threshold matrix is as large as or larger than twice and as large as or smaller than 10 times (more preferably, as large as or larger than 3 times and as large as or smaller than 6 times) the pitch of halftone dots in the halftone image generated with the first threshold matrix (the same is applied in the threshold matrix for the AM screening).

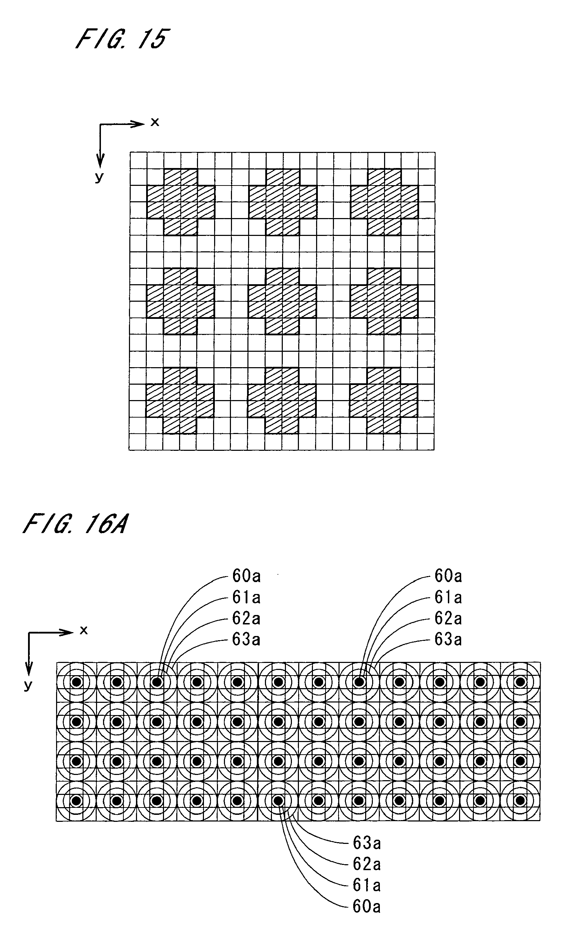

Like a tint image shown in Fig. 15, a tint image (or/and a halftone image printed with the color inks) may be generated with a threshold matrix for the AM screening where gray levels are represented by changing the size of halftone dots (clusters each of which is a group of pixels connecting one another) which are regularly arranged in a halftone image.

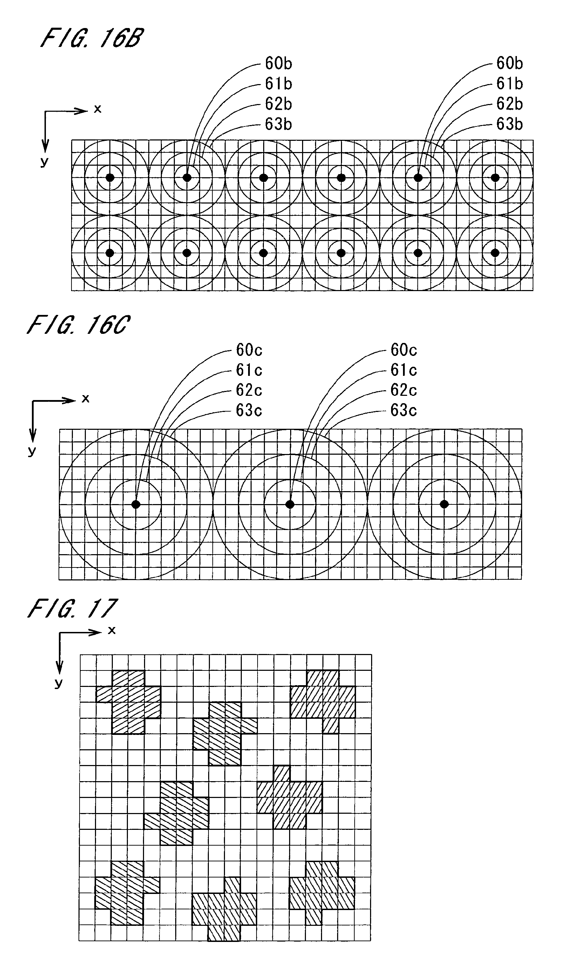

If an image with a uniform gray level (pixel value) is represented by halftone dots with using each of a plurality of threshold matrixes for the AM screening, a plurality of halftone images shown in Figs. 16A to 16C are generated. In each of Figs. 16A to 16C, halftone dots corresponding to a relatively low gray level, a middle gray level and a relatively high gray level out of the whole range of gray levels of the image are abstractly shown by three concentric circles around dot centers 60a, 60b, 60c. Smallest halftone dots 61 a, 61 b, 61 c correspond to the low gray level, largest halftone dots 63a, 63b, 63c correspond to the high gray level, and middle halftone dots 62a, 62b, 62c correspond to the middle gray level.

The size (diameter) of halftone dot is larger with increase of gray level. In each gray level, the size of halftone dot is maximum in the halftone image of Fig. 16C and is minimum in the halftone image of Fig. 16A. In each of the halftone images shown in Figs. 16A to 16C, the density of halftone dots (i.e., the number of halftone dots or dot centers included in a unit area with a predetermined size) is constant in any gray levels. In the halftone images shown in Figs. 16A to 16C, the highest density of halftone dots is in the halftone image of Fig. 16A and the lowest density of halftone dots is in the halftone image of Fig. 16C.

Though the tint image generated with the second threshold matrix for the AM screening has directional property, gloss on a printed image is almost uniform as long as using the second threshold matrix where the density of halftone dots in a halftone image generated with the second threshold matrix is lower than that in a halftone image generated with the first threshold matrix for generation of the image of the color inks.

Further, a tint image like in Fig. 17 may be generated by using a threshold matrix where the size of halftone dot is changed around dot centers, which are irregularly arranged in a halftone image, in accordance with change in gray level (i.e., the threshold matrix is one for a hybrid screen). Since the tint image generated with such a threshold matrix normally has isotropy, it is possible to make a printed matter with uniform gloss without depending on a viewing direction, similarly to the case of using the threshold matrix for the FM screening.

Next discussion will be made on another example of a printer. Fig. 18 is a view showing a head 3a in a printer in accordance with another example. In the head 3a of Fig. 18, the light irradiation part 38 is provided only on the (-X) side of the nozzle units 31, 31a. The constitution of the printer having the head 3a of Fig. 18 is the same as that of the printer 1 of Fig. 1 except that the light irradiation part 38 on the (+X) side of the head 3 of Fig. 2 is omitted, and a halftone image and a tint image which are printed are the same as those in the printer 1.

In a printing operation in the printer having the head 3a of Fig. 18, an image of the color inks and an image of the clear ink are printed on the base member 9 concurrently. Specifically, after generation of data of the halftone image and data of the tint image (Fig. 5: Steps S11, S16), continuous main scanning of the head 3a (the head 3a shown by a solid line in Fig. 18) toward (+X) direction is started (Steps S12, S17). In parallel with main scanning of the head 3a, ejection control of the color inks on the nozzle unit 31 and ejection control of the clear ink on the nozzle unit 31 a are performed (Steps S 13, S 18) and UV light is applied from the light irradiation part 38 to the color inks and the clear ink which are ejected onto the base member 9 (Steps S 14, S 19).

Similarly to the printing operation discussed referring to Fig. 3, in a case where, at times T1 to T4, unit dots of K, C, M, Y are sequentially formed at each writing position 91 which the head 3a passes through as shown in Figs. 7A to 7D, at a time T5 where the head 3a moves in the (+X) direction by the writing position pitch from the position at the time T4 (the position where writing shown in Fig. 7D has been performed), an outlet 311 of the nozzle unit 31a for ejecting the clear ink reaches above the writing position 91a as shown by double-dashed lines in Fig. 18, an outlet 311 of the nozzle unit 31 for ejecting the color ink of Y reaches above the writing position 91 b, an outlet 311 of the nozzle unit 31 for ejecting the color ink of M reaches above the writing position 91c, an outlet 311 of the nozzle unit 31 for ejecting the color ink of C reaches above the writing position 91d, and then, an outlet 311 of the nozzle unit 31 for ejecting the color ink of K reaches above the writing position 91 e.

With this operation, as shown in Fig. 19, a unit dot of the clear ink is formed on unit dots of K, C, M and Y at the writing position 91a, a unit dot of ink of Y is formed on unit dots of K, C and M at the writing position 91 b, a unit dot of ink of M is formed on unit dots of K and C at the writing position 91c, a unit dot of ink of C is formed on a unit dot of K at the writing position 91d, and a unit dot of ink of K is formed at the writing position 91e. In Fig. 19, a circle in which "T" is described represents a unit dot of the clear ink. Since an area where an image of the color inks is actually printed is smaller than a printing area (the whole main surface of the base member 9) where an image of the clear ink is printed, the color inks are not ejected at a writing position 91 which is close to an outer part of the printing area.

In this manner, ejection control of the plurality of color inks and ejection control of the clear ink are sequentially performed at each writing position 91 on the base member 9 which the head 3a passes through, and the head 3a reaches on the (+X) side of the base member 9. Subsequently, the head 3a goes back to the (-X) side of the base member 9 without ejection of the inks, in parallel with movement of the base member 9 toward the (-Y) direction. Then, in the next main scanning, the head 3a moves toward the (+X) direction while ejecting the color inks and the clear ink. As described, ejection control of the inks is performed only in movement of the head 3a toward the (+X) direction. After an image of the color inks and an image of the clear ink are concurrently printed on the whole base member 9, driving of the stage moving mechanism 22 and the head moving mechanism 24 are stopped to complete the printing operation in the printer (Steps S 15, S20).

As discussed above, in the printer having the head 3a of Fig. 18, the operation for printing the halftone image with the color inks and the operation for printing the tint image with the clear ink are concurrently performed. Thus, it is possible to make a printed matter with uniform gloss in an inkjet manner for a short time.

Though the preferred embodiment of the present invention has been discussed above, the present invention is not limited to the above-discussed preferred embodiment, but allows various variations.

In the above preferred embodiment, although a printed matter can be easily made by printing an image of the color inks and an image of the clear ink in the inkjet printer, the image of the color inks and the image of the clear ink on the base member 9 may be printed by a printing mechanism other than an inkjet printing mechanism or different printing mechanisms from each other. For example, in a case where a printing mechanism for printing a halftone image on a base member 9 with the color inks is referred to as a first printing part and a printing mechanism for printing a tint image on the base member 9 with the clear ink is referred to as a second printing part, there may be a case where a printing mechanism for plate printing (printing with plate) such as screen printing, offset printing, gravure printing, flexography, and letter press printing or an electrophotographic printing mechanism serves as the first printing part to print an image of the color inks on the base member 9, and thereafter the above inkjet printer (printing mechanism) serves as the second printing part and only prints an image of the clear ink on the base member 9. Also, there may be a case where the inkjet printing mechanism serves as the first printing part to print an image of the color inks on a base member 9 and thereafter, another printing mechanism serves as the second printing part to print an image of the clear ink on the base member 9.

In a case where the printing mechanism for plate printing serves as the first printing part, a printing plate used in the printing mechanism is made based on a halftone image which is generated from a grayscale original image with use of the first threshold matrix. In a case where the printing mechanism for plate printing serves as the second printing part, a printing plate used in the printing mechanism is made based on a tint image which is a halftone image generated from an image with a uniform gray level with use of the second threshold matrix where the number of halftone dots which are defined (settable) in a unit area in a halftone image generated with the second threshold matrix is smaller than that in a halftone image generated with the first threshold matrix, the tint image having a dot area rate which is equal to or larger than 1 % and equal to or smaller than 40 %.

In a case where a (plateless) printing mechanism without using a plate in an inkjet manner, an electrophotographic manner or the like, serves as the first printing part, printing operation is performed based on data of a halftone image which is generated from a grayscale original image with use of the first threshold matrix. In a case where the plateless printing mechanism serves as the second printing part, printing operation is performed based on data of a tint image which is a halftone image generated from an image with a uniform gray level with use of the second threshold matrix where the number of halftone dots which are defined (settable) in a unit area in a halftone image generated with the second threshold matrix is smaller than that in a halftone image generated with the first threshold matrix, the tint image having a dot area rate which is equal to or larger than 1 % and equal to or smaller than 40 %. As a result, in a printer having the first printing part and the second printing part, it is possible to make a printed matter with uniform gloss.

In the case that a printing mechanism for printing an image of the color inks is referred to as a first printing part and a printing mechanism for printing an image of the clear ink is referred to as a second printing part as discussed above, it is considered that, in the above inkjet printer for performing both of printing of the image of the color inks and printing of the image of the clear ink, the first printing part has the plurality of outlets 311 in the nozzle units 31 for ejecting fine droplets of the color inks with UV curability onto the base member 9, the second printing part has the plurality of outlets 311 in the nozzle unit 31a for ejecting fine droplets of the clear ink with UV curability onto the base member 9, and the stage moving mechanism 22 and the head moving mechanism 24 which are moving mechanisms for moving the nozzle units 31, 31a relatively to the base member 9 and the light irradiation parts 38 for applying UV light to the inks (the color inks and the clear ink) on the base member 9, are shared between the first printing part and the second printing part.

From the view point of efficiently lessening (decreasing) small projections and depressions of the color inks formed on the base member 9 with using the clear ink, it is preferable that, in a printer having the first printing part and the second printing part, a printing mechanism for screen printing where inks can be applied onto the base member 9 relatively thickly or an inkjet printing mechanism is used as the second printing part.

In the above preferred embodiment, a part of the printing area of the base member 9 is an area where the image of the color inks is printed and the tint image is printed on the whole of the printing area with using the clear ink, to thereby make a printed matter with uniform gloss in the whole of the printing area and suppress the difference of textures in an area where the image of the color inks is printed and another area on the main surface of the base member 9. However, the image of the color inks may be printed on the whole of the printing area depending on the use of the base member 9, such as a case where it is unnecessary to provide a blank area around the image of the color inks in the printed matter.

Though the threshold matrix where the pitch of halftone dots (or an average value of pitches) in the row direction in a generated halftone image is equal to that in the column direction is used in the above preferred embodiment, a threshold matrix where the pitch of halftone dots in the row direction is different from that in the column direction may be used in generation of a halftone image printed with the color inks and a tint image printed with the clear ink.

The ink with light curability used in the inkjet printer may have curability to light in a wavelength band other than UV light. In this case, the light emitted from the light irradiation parts 38 includes the above wavelength band. Depending on design of the printer, a light irradiation part for applying light onto the whole of the base member 9 may be provided.

The base member 9 where an image of the color inks and an image of the clear ink are printed may be used for an application other than display. For example, there may be a case where the base member 9 is a plate-like or sheet-like member which is formed of resin with liquid repellency such as polycarbonate or PET (polyethylene terephthalate) and used for display panels of various apparatus, decorative sheets for a furniture and building material, and the like. That is, an object for printing in a printer can be variously changed.

While the invention has been shown and described in detail, the foregoing description is in all aspects illustrative and not restrictive. It is therefore understood that numerous modifications and variations can be devised without departing from the scope of the invention.

## Claims

1. A method of printing an image on an object (9), comprising:
a) a step (S12 to S 15) of printing a halftone image (81) on an object having liquid repellency with using color inks, said halftone image being generated from a grayscale original image (70) with use of a first threshold matrix (710), and **characterized by**
b) a step (S17 to S20) of printing a tint image (82) on said object with using clear ink to overlay an image of said clear ink on an image of said color inks, said tint image being a halftone image generated from an image with a uniform gray level with use of a second threshold matrix where the number of halftone dots which are defined in a unit area in a halftone image generated with said second threshold matrix is smaller than that in a halftone image generated with said first threshold matrix, said tint image having a dot area rate which is equal to or larger than 1 % and equal to or smaller than 40 %.

2. The method according to claim 1, wherein
said step b) comprises:
b1) a step (S18) of ejecting fine droplets of clear ink with light curability, onto said object from a plurality of outlets (311);
b2) a step (S17, S20) of moving said plurality of outlets relatively to said object in parallel with said step b1); and
b3) a step (S 19) of applying light to said clear ink on said object.

3. The method according to claim 2, wherein
said step a) comprises:
a1) a step (S13) of ejecting fine droplets of color inks with light curability, onto said object from another plurality of outlets;
a2) a step (S 12, S15) of moving said another plurality of outlets relatively to said object in parallel with said step a1); and
a3) a step (S14) of applying light to said color inks on said object.

4. The method according to claim 3, wherein
said steps a) and b) are concurrently performed.

5. The method according to any one of claims 1 to 4, wherein
said tint image has isotropy.

6. The method according to any one of claims 1 to 5, wherein
a part of a printing area of said object is an area where said image of said color inks is printed, and
said tint image is printed on a whole of said printing area.

7. A printer (1) for printing an image on an object (9), comprising:
a first printing part (22, 24, 38, 311) for printing a halftone image (81) on an object having liquid repellency with using color inks, said halftone image being generated from a grayscale original image (70) with use of a first threshold matrix (710), and **characterized by**
a second printing part (22, 24, 38, 311) for printing a tint image (82) on said object with using clear ink to overlay an image of said clear ink on an image of said color inks, said tint image being a halftone image generated from an image with a uniform gray level with use of a second threshold matrix where the number of halftone dots which are defined in a unit area in a halftone image generated with said second threshold matrix is smaller than that in a halftone image generated with said first threshold matrix, said tint image having a dot area rate which is equal to or larger than 1 % and equal to or smaller than 40 %.

8. The printer according to claim 7, wherein
said second printing part comprises:
a plurality of outlets (311) for ejecting fine droplets of clear ink with light curability onto said object;
a moving mechanism (22, 24) for moving said plurality of outlets relatively to said object; and
a light irradiation part (38) for applying light to said clear ink on said object.

9. The printer according to claim 8, wherein
said first printing part further comprises another plurality of outlets (311) for ejecting fine droplets of color inks with light curability, onto said object,
said moving mechanism moves said plurality of outlets and said another plurality of outlets relatively to said object, and
said light irradiation part applies light to said color inks on said object.

10. The printer according to claim 9, wherein
said image of said color inks and said image of said clear ink are printed on said object concurrently.

11. The printer according to any one of claims 7 to 10, wherein
said tint image has isotropy.

12. The printer according to any one of claims 7 to 11, wherein
a part of a printing area of said object is an area where said image of said color inks is printed, and
said tint image is printed on a whole of said printing area.
